# EUROPEAN PATENT SPECIFICATION

(11) **EP 3 155 520 B1**
(45) Date of publication and mention of the grant of the patent: **04.11.2026**
(21) Application number: 15810478.6
(22) Date of filing: 16.06.2015
(51) Int. Cl.: G06F 21/74, G06F 21/83, G06F 9/455

(54) **OUT-OF-BAND SPY DETECTION AND PREVENTION FOR PORTABLE WIRELESS SYSTEMS**
DETEKTION UND PRÄVENTION EINES BANDEXTERNEN SPIONS FÜR TRAGBARE DRAHTLOSE SYSTEME
DÉTECTION D'ESPION HORS DE BANDE ET PRÉVENTION POUR DES SYSTÈMES SANS FIL PORTABLES

(30) Priority: 16.06.2014 US 201414305829
(43) Date of publication of application: 19.04.2017
(73) Proprietor: Green Hills Software, Inc., Santa Barbara, CA 93101 (US)
(72) Inventor: O'DOWD, Daniel, Santa Barbara, CA 93101 (US); KLEIDERMACHER, David, Santa Barbara, CA 93101 (US); CANTRELL, Thomas, Santa Barbara, CA 93101 (US); KOU, Dennis, Santa Barbara, CA 93101 (US); HETTENA, Daniel, Santa Barbara, CA 93101 (US)
(74) Representative: Eisenführ Speiser
(86) International application number: PCT/US2015/035901
(87) International publication number: WO 2015/195584

(56) References cited:
- EP-A1- 2 587 397
- US-A1- 2007 078 683
- US-A1- 2010 325 720
- US-A1- 2011 252 459
- US-A1- 2012 054 486
- US-A1- 2012 320 842
- US-A1- 2013 198 868
- US-A1- 2013 238 169
- US-A1- 2013 246 208
- US-A1- 2013 332 924
- US-A1- 2014 015 987
- US-A1- 2014 044 265
- US-A1- 2014 068 247
- US-A1- 2014 075 496
- US-A1- 2014 115 709
- US-B1- 8 261 320
- US-B2- 7 565 701
- US-B2- 8 312 452
- US-B2- 8 373 870
- US-B2- 8 374 842
- US-B2- 8 473 945
- US-B2- 8 612 633
- US-B2- 8 683 575
- HE LIU ET AL: "Software abstractions for trusted sensors", PROCEEDINGS OF THE 10TH INTERNATIONAL CONFERENCE ON MOBILE SYSTEMS, APPLICATIONS, AND SERVICES, MOBISYS '12, 1 January 2012 (2012-01-01), New York, New York, USA, pages 365, XP055269376, ISBN: 978-1-4503-1301-8, DOI: 10.1145/2307636.2307670

## Description

### BACKGROUND OF THE DISCLOSURE

### 1. Cross-Reference to Related Applications

This application claims priority to United States Patent Application Number 14/305,829, entitled "Out-of-Band Spy Detection and Prevention for Portable Wireless Systems," and filed June 16, 2014.

### 2. Field of the Disclosure

This disclosure generally relates to a portable wireless device solution that utilizes machine and input/output (I/O) virtualization techniques to defeat spying attacks against general-purpose operating systems that commonly control portable wireless systems.

### 3. General Background

As portable wireless devices - such as smartphones, tablets, automotive infotainment systems, and so-called "Internet of Things" sensor-based devices - gain in popularity and use, they are increasingly being targeted by cyber attackers, who use device wireless communications pathways to launch remote attacks against the device's operating system. Many such operating systems, for example, iOS, Linux, Windows, and Android, are extremely complicated and have a lengthy track record of containing numerous exploitable security vulnerabilities. One family of attack vectors attempts to surreptitiously activate the portable device's input peripherals - such as audio, wireless communications (Wi-Fi, Bluetooth, etc.), and cameras - to gather locally available/generated private information without proper authorization (i.e. spy).

Portable device operating systems employ a number of security controls aimed at preventing unauthorized manipulation of input peripherals; however, the vulnerabilities in the operating systems themselves may render such controls impotent, since an attacker can simply use one of these vulnerabilities to commandeer the operating system and disable or otherwise circumvent its security controls.

US 2014/0015987 A1 discloses an example system that allows a camera enabled application, such as an augmented reality application, to run in a protected area. The system may include a first device including a camera, the camera including a secure mode of operation and a display, an image processing module configured to convert image data from the camera to encoded data when the camera is in the secure mode and protect image data stored in the system, an encryption module configured to encrypt encoded data from the image processing module, and a protected audiovisual path mechanism configured to securely send augmented encoded data to the display.

Software Abstractions for Trusted Sensors by He Lie et al discloses two software abstractions for offering trusted sensors to mobile applications. The design and implementation of these abstractions are presented on both x86 and ARM platforms. A trusted GPS sensor is implemented on both platforms, and a privacy control for trusted location using differential privacy is provided. Implementing these abstractions comes with moderate overhead on both x86 and ARM platforms.

EP 2 587 397 A1 discloses a web browser in which access is controlled with respect to at least one user data providing device, the web browser comprising a browser engine, a browser application and a device access proxy, DAP. Access is acquired, in the DAP, to at least one user data providing device and a request is received from a web application for user data from a first user data providing device. In response to the request, default data is transmitted from the DAP to the web application.

US 2014/0075496 A1 relates to devices, methods and systems for securely providing context sensor data to mobile platform applications. The method may include configuring sensors to provide context data, the context data associated with a mobile device; providing an application programming interface (API) to a sensor driver, the sensor driver configured to control the sensors; providing a trusted execution environment (TEE) operating on the mobile device, the TEE configured to host the sensor driver and restrict control and data access to the sensor driver and to the sensors; generating a request for the context data through the API, the request generated by an application associated with the mobile device; receiving, by the application, the requested context data and a validity indicator through the API; verifying, by the application, the requested context data based on the validity indicator; and adjusting a policy associated with the application based on the verified context data.

A user data access confirmation signal is obtained, and in response to the user data access confirmation signal, the transmission of the default data is discontinued and the requested user data is transmitted from the DAP to the web application.

### BRIEF DESCRIPTION OF THE DRAWINGS

By way of example, reference will now be made to the accompanying drawings.
Figure 1 illustrates a block diagram of a computing device employing virtualization techniques in accordance with certain embodiments.
Figure 2 is an exemplary block diagram of a computing device that may be used to implement aspects of certain embodiments of the present invention.

### DETAILED DESCRIPTION

Those of ordinary skill in the art will realize that the following description of the present invention is illustrative only and not in any way limiting. Other embodiments of the invention will readily suggest themselves to such skilled persons, having the benefit of this disclosure. Reference will now be made in detail to specific implementations of the present invention as illustrated in the accompanying drawings. The same reference numbers will be used throughout the drawings and the following description to refer to the same or like parts.

Further, certain figures in this specification are flow charts illustrating methods and systems. It will be understood that each block of these flow charts, and combinations of blocks in these flow charts, may be implemented by computer program instructions. These computer program instructions may be loaded onto a computer or other programmable apparatus to produce a machine, such that the instructions which execute on the computer or other programmable apparatus create structures for implementing the functions specified in the flow chart block or blocks. These computer program instructions may also be stored in a computer-readable memory that can direct a computer or other programmable apparatus to function in a particular manner, such that the instructions stored in the computer-readable memory produce an article of manufacture including instruction structures which implement the function specified in the flow chart block or blocks. The computer program instructions may also be loaded onto a computer or other programmable apparatus to cause a series of operational steps to be performed on the computer or other programmable apparatus to produce a computer implemented process such that the instructions which execute on the computer or other programmable apparatus provide steps for implementing the functions specified in the flow chart block or blocks.

Accordingly, blocks of the flow charts support combinations of structures for performing the specified functions and combinations of steps for performing the specified functions. It will also be understood that each block of the flow charts, and combinations of blocks in the flow charts, can be implemented by special purpose hardware-based computer systems which perform the specified functions or steps, or combinations of special purpose hardware and computer instructions.

For example, any number of computer programming languages, such as C, C++, C# (CSharp), Perl, Ada, Python, Pascal, SmallTalk, FORTRAN, assembly language, and the like, may be used to implement aspects of the present invention. Further, various programming approaches such as procedural, object-oriented or artificial intelligence techniques may be employed, depending on the requirements of each particular implementation. Compiler programs and/or virtual machine programs executed by computer systems generally translate higher level programming languages to generate sets of machine instructions that may be executed by one or more processors to perform a programmed function or set of functions.

The term "machine-readable medium" should be understood to include any structure that participates in providing data which may be read by an element of a computer system. Such a medium may take many forms, including but not limited to, non-volatile media, volatile media, and transmission media. Non-volatile media include, for example, optical or magnetic disks and other persistent memory. Volatile media include dynamic random access memory (DRAM) and/or static random access memory (SRAM). Transmission media include cables, wires, and fibers, including the wires that comprise a system bus coupled to processor. Common forms of machine-readable media include, for example, a floppy disk, a flexible disk, a hard disk, a magnetic tape, any other magnetic medium, a CD-ROM, a DVD, any other optical medium.

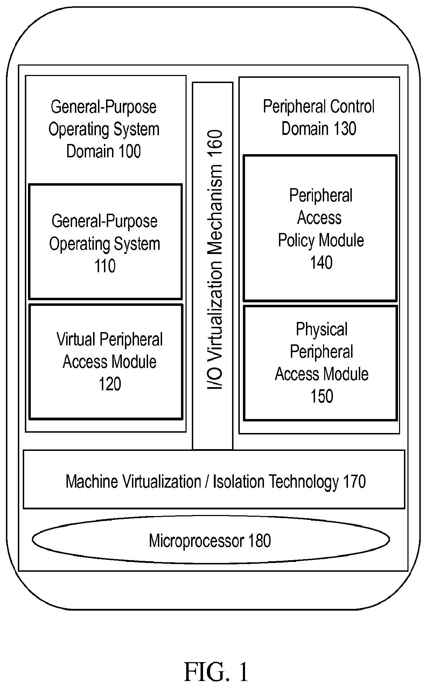

As shown in Figure 1, certain embodiments employ an "out-of-band" mechanism in which the physical controls for activating input peripherals are removed from the portable device operating system domain 100 and placed instead under the control of a separate peripheral control domain 130, isolated from the general-purpose operating system domain 100 by a machine virtualization / isolation technology 170. The machine virtualization / isolation technology 170 may employ machine virtualization techniques that enable the peripheral control domain 130 to run alongside, but securely isolated from the general-purpose portable operating system 110 on the same general-purpose microprocessor 180 that would be used in a system that lacks the above features. No additional hardware may be required to implement the foregoing embodiments. An adjunct I/O virtualization mechanism 160 may also be included to abstract the guarded input peripheral interfaces, such that all attempts to turn them on from within the general-purpose operating system 110 are automatically redirected by the I/O virtualization mechanism 160 to the peripheral control domain 130. The peripheral control domain 130 may then conduct a policy-driven decision process via peripheral access policy module 140 to either allow, disallow, or request manual/explicit authorization of these access attempts. If access is permitted, such physical access may be performed by physical peripheral access module 150 within the peripheral control domain 130 and not within the general-purpose operating system domain 100. Because the access control and physical activation of input peripherals occur out-of-band from the operating system 100, these security-critical operations may be immune to vulnerabilities in the portable operating system 100.

In certain embodiments, the I/O manipulation mechanisms described in this disclosure do not impact the user experience; nothing in the user interface or in the behavior of general-purpose operating system application software is changed.

In certain embodiments, a portable computing device is disclosed comprising: at least one portable operating system domain; a peripheral control domain; a machine virtualization mechanism that isolates the at least one operating system domain from the peripheral control domain; and an I/O virtualization mechanism configured to be interposed between the operating system domain and the peripheral control domain and configured to translate operating system-originated input peripheral access requests and responses. The peripheral control domain may comprise: a physical peripheral control component; and a policy component for deciding how to handle input peripheral requests originating from the operating system. The machine virtualization mechanism may comprise a Type-1 hypervisor. The machine virtualization mechanism may comprise a Type-2 hypervisor. The machine virtualization mechanism may utilize ARM TrustZone. The machine virtualization mechanism may comprise a microkernel. The machine virtualization mechanism may comprise a separation kernel. The policy component may be configured to perform a local, autonomous decision regarding whether to allow input peripheral access based at least in part on at least one detectable condition. The at least one detectable condition may comprise at least one of a geolocation, one or more fixed policy settings, and an active connection to a trusted network. The policy component may be configured to request a user input to grant permission to access the input peripheral and the machine virtualization mechanism may be configured to render the portable operating system unable to overwrite or corrupt the input request process if the user input does not grant access. The policy component may receive a decision from a remote system. The remote system may comprise one of a manual control system or an automated control system. The policy component may record in an audit log all attempts to access input peripherals. The audit log may be locally stored within the portable device. The audit log may be transmitted to the remote system. The device may further comprise an input / data generation peripheral comprising at least one of: an audio device, a Bluetooth module, a near-field communications (NFC) module, a Wi-Fi module, a camera, a sensor, a global positioning system module, a ZigBee module and an IEEE 802.15.4 module. The I/O virtualization mechanism may comprise: one or more alternative virtualized controls that mimic one or more operating system peripheral controls for interfacing with the operating system. The I/O virtualization mechanism may comprise: a logical communications interface between the operating system domain and the peripheral control module domain for translating control requests and responses. The I/O virtualization mechanism may comprise at least one microprocessor trap to detect an attempt to access at least one physical peripheral. The machine virtualization mechanism may be configured to transfer control to the peripheral control module based on the detected attempt.

In certain embodiments, a portable computing device is disclosed comprising: at least one portable operating system module; a peripheral control module; a machine virtualization module that isolates the at least one operating system module from the peripheral control module; and an I/O virtualization module interposed between the operating system module and the peripheral control module and configured to translate operating system-originated input peripheral access requests and responses. The peripheral control module may comprise: a physical peripheral control module; and a policy module for deciding how to handle input peripheral requests originating from the operating system module. The machine virtualization module may comprise a Type-1 hypervisor. The machine virtualization module may comprise a Type-2 hypervisor. The machine virtualization module may utilize ARM TrustZone. The machine virtualization module may comprise one of a microkernel and a separation kernel. The policy module may be configured to perform a local, autonomous decision regarding whether to allow input peripheral access based at least in part on at least one detectable condition. The at least one detectable condition may comprise at least one of a geolocation, one or more fixed policy settings, and an active connection to a trusted network. The policy module may be configured to request a user input to grant permission to access the input peripheral and the machine virtualization module may be configured to render the portable operating system unable to overwrite or corrupt the input request process if the user input does not grant access. The policy module may receive a decision from a remote system. The remote system may comprise one of a manual control system or an automated control system. The policy module may record in an audit log all attempts to access input peripherals. The audit log may be locally stored within the portable device. The audit log may be transmitted to the remote system. The device may further comprise an input / data generation peripheral comprising at least one of: an audio device, a Bluetooth module, a near-field communications (NFC) module, a Wi-Fi module, a camera, a sensor, a global positioning system module, a ZigBee module and an IEEE 802.15.4 module. The I/O virtualization module may comprise: one or more alternative virtualized controls that mimic one or more operating system peripheral controls for interfacing to the operating system. The I/O virtualization module may comprise: a logical communications interface between the operating system module and the peripheral control module for translating control requests and responses. The I/O virtualization module may comprise at least one microprocessor trap to detect an attempt to access physical peripherals. The machine virtualization module may be configured to transfer control to the peripheral control module based on the detected attempt.

In certain embodiments, a method of domain isolation is disclosed, comprising: receiving an input peripheral access request from at least one portable device operating system; and performing a local, autonomous decision whether to allow input peripheral access based at least in part on at least one detectable condition, wherein the at least one portable device operating system is isolated from a peripheral access module domain by a machine virtualization module. The peripheral access module domain may comprise: a physical peripheral control module; and a policy module for deciding how to handle input peripheral requests originating from the operating system. The machine virtualization module may comprise a Type-1 hypervisor. The machine virtualization module may comprise a Type-2 hypervisor. The machine virtualization module may utilize ARM TrustZone. The machine virtualization module may comprise a microkernel or may comprise a separation kernel. The at least one detectable condition may comprise at least one of a geolocation, one or more fixed policy settings, and an active connection to a trusted network. The method may further comprise: requesting a user input whether to allow the input peripheral access; and selectively permitting access to the input peripheral based at least in part on the user input. Selectively permitting access may comprise rendering the operating system unable to overwrite the input request process if the user input does not provide permission to access the input peripheral. The method may further comprise: providing one or more alternative virtualized controls that mimic one or more operating system peripheral controls for interfacing to the operating system. The method may further comprise: translating at least one control request and at least one response via a logical communications interface between the operating system domain and the peripheral control module domain. The method may further comprise: detecting an attempt to access at least one physical peripheral; and transferring control of the at least one physical peripheral to the peripheral access module domain.

In certain embodiments, the machine virtualization mechanism may inform a local user of the input peripheral access attempt and request approval by using a dialog box on the portable device touch screen. This graphical interface may run on the machine virtualization mechanism (within the peripheral control domain or yet another domain isolated from the general-purpose operating system domain) and the entire display and touch input system may be virtualized so that this authorization interaction also occurs out-of-band from the portable operating system and may therefore be immune to its vulnerabilities.

In certain embodiments, a portable computing device is disclosed including: at least one portable operating system domain; a peripheral control domain comprising a policy component for detecting and responding to an unauthorized attempt to activate an input peripheral; a machine virtualization mechanism that isolates the at least one operating system domain from the peripheral control domain; and an I/O virtualization mechanism configured to be interposed between the operating system domain and the peripheral control domain and configured to translate operating system-originated input peripheral access requests and responses. The policy component may be configured to detect an unauthorized attempt by detecting an attempt to access an input peripheral when the device is in a lower power state. The policy component may be configured to detect an attempt to access an input peripheral when a user screen is blanked. The policy component may be configured to detect an attempt to access an input peripheral by an operating system component or application that is not on a white list of permitted activators of the input peripheral. The policy component may be configured to detect an attempt to access an input peripheral when the device is in a geolocation not approved for use of the peripheral. The policy component may be configured to consult a remote server for a decision whether to permit access to an input peripheral when access to the input peripheral is detected. The policy component may be configured to activate an alarm when an unauthorized attempt to activate an input peripheral is detected. The machine virtualization mechanism may include a Type-1 hypervisor. The machine virtualization mechanism may include a Type-2 hypervisor. The machine virtualization mechanism may utilize ARM TrustZone. The machine virtualization mechanism may include a microkernel. The machine virtualization mechanism may include a separation kernel. The policy component may be configured to perform a local, autonomous decision regarding whether to allow input peripheral access based at least in part on at least one detectable condition. The at least one detectable condition may include at least one of a geolocation, one or more fixed policy settings, and an active connection to a trusted network. The policy component may be configured to request a user input to grant permission to access the input peripheral and the machine virtualization mechanism is configured to render the portable operating system unable to overwrite or corrupt the input request process if the user input does not grant access. The machine virtualization mechanism may be configured to render the portable operating system unable to overwrite or corrupt the input request process in response to detection of an unauthorized attempt to access an input peripheral. The policy component may receive a decision from a remote system. The remote system may comprise one of a manual control system or an automated control system. The policy component may record in an audit log all attempts to access input peripherals. The audit log may be locally stored within the portable device. The audit log may be transmitted to the remote system. The device may further include an input / data generation peripheral comprising at least one of: an audio device, a Bluetooth module, a near-field communications (NFC) module, a Wi-Fi module, a camera, a sensor, a global positioning system module, a ZigBee module and an IEEE 802.15.4 module. The I/O virtualization mechanism may include one or more alternative virtualized controls that mimic one or more operating system peripheral controls for interfacing with the operating system. The I/O virtualization mechanism may include a logical communications interface between the operating system domain and the peripheral control module domain for translating control requests and responses. The I/O virtualization mechanism may include at least one microprocessor trap to detect an attempt to access at least one physical peripheral. The machine virtualization mechanism may be configured to transfer control to the peripheral control module based on the detected attempt.

In certain embodiments, a portable computing device is disclosed including: at least one portable operating system module; a peripheral control module comprising a policy module for detecting and responding to an unauthorized attempt to activate an input peripheral; a machine virtualization module that isolates the at least one operating system module from the peripheral control module; and an I/O virtualization module interposed between the operating system module and the peripheral control module and configured to translate operating system-originated input peripheral access requests and responses. The policy module may be configured to detect an attempt to access an input peripheral when the device is in a lower power state. The policy module may be configured to detect an attempt to access an input peripheral when a user screen is blanked. The policy module may be configured to detect an attempt to access an input peripheral by an operating system component or application that is not on a white list of permitted activators of the input peripheral. The policy module may be configured to detect an attempt to access an input peripheral when the device is in a geolocation not approved for use of the peripheral. The policy module may be configured to consult a remote server for a decision whether to permit access to an input peripheral when access to the input peripheral is detected. The policy module may be configured to activate an alarm when an unauthorized attempt to activate an input peripheral is detected. The machine virtualization module may include a Type-1 hypervisor. The machine virtualization module may include a Type-2 hypervisor. The machine virtualization module may utilize ARM TrustZone. The machine virtualization module may include one of a microkernel and a separation kernel. The policy module may be configured to perform a local, autonomous decision regarding whether to allow input peripheral access based at least in part on at least one detectable condition. The at least one detectable condition may include at least one of a geolocation, one or more fixed policy settings, and an active connection to a trusted network. The policy module may be configured to request a user input to grant permission to access the input peripheral and the machine virtualization module is configured to render the portable operating system unable to overwrite or corrupt the input request process if the user input does not grant access. The machine virtualization mechanism may be configured to render the portable operating system unable to overwrite or corrupt the input request process in response to detection of an unauthorized attempt to access an input peripheral. The policy module may receive a decision from a remote system. The remote system may include one of a manual control system or an automated control system. The policy module may record in an audit log all attempts to access input peripherals. The audit log may be locally stored within the portable device. The audit log may be transmitted to the remote system. The device may further include an input / data generation peripheral comprising at least one of: an audio device, a Bluetooth module, a near-field communications (NFC) module, a Wi-Fi module, a camera, a sensor, a global positioning system module, a ZigBee module and an IEEE 802.15.4 module. The I/O virtualization module may include one or more alternative virtualized controls that mimic one or more operating system peripheral controls for interfacing to the operating system. The I/O virtualization module may include a logical communications interface between the operating system module and the peripheral control module for translating control requests and responses. The I/O virtualization module may include at least one microprocessor trap to detect an attempt to access physical peripherals. The machine virtualization module may be configured to transfer control to the peripheral control module based on the detected attempt.

In certain embodiments, a method of domain isolation is disclosed, including: receiving an input peripheral access request from at least one portable device operating system; determining if the request is an unauthorized attempt to activate an input peripheral; executing a protective response if the request is determined to be an unauthorized attempt to activate an input peripheral; wherein the at least one portable device operating system is isolated from a peripheral access module domain by a machine virtualization module and wherein the steps of determining and executing are performed in the peripheral access domain. The peripheral access module domain may include a policy module for deciding how to respond to peripheral requests originating from the operating system. The machine virtualization module may include a Type-1 hypervisor. The machine virtualization module may include a Type-2 hypervisor. The machine virtualization module may utilize ARM TrustZone. The machine virtualization module may include one of a microkernel and a separation kernel. The machine virtualization module may include a Type-1 hypervisor. The machine virtualization module may include a Type-2 hypervisor. The machine virtualization module may utilize ARM TrustZone. The machine virtualization module may include one of a microkernel and a separation kernel. The step of determining may be based at least in part on at least one detectable condition selected from a geolocation, one or more fixed policy settings, and an active connection to a trusted network. The method may further include: requesting a user input whether to allow the input peripheral access; and selectively permitting access to the input peripheral based at least in part on the user input. Selectively permitting access may include rendering the operating system unable to overwrite the input request process if the user input does not provide permission to access the input peripheral. The step of determining may include detecting an attempt to access an input peripheral when the device is in a lower power state. The step of determining may include detecting an attempt to access an input peripheral when a user screen is blanked. The step of determining may include detecting an attempt to access an input peripheral by an operating system component or application that is not on a white list of permitted activators of the input peripheral. The step of determining may include detecting an attempt to access an input peripheral when the device is in a geolocation not approved for use of the peripheral. The method may further include consulting a remote server for a decision whether to permit access to an input peripheral when access to the input peripheral is detected. The step of executing a protective response may include activating an alarm when an unauthorized attempt to activate an input peripheral is detected. The step of executing a protective response may include rendering the operating system unable to overwrite the input request process if the user input does not provide permission to access the input peripheral. The step of executing a protective response may include logging the attempt locally. The step of executing a protective response may include logging the attempt remotely. The step of executing a protective response may include an audible alarm. The step of executing a protective response may include halting the operating system. The step of executing a protective response may include rendering the operating system inoperable. The step of executing a protective response may include a data wipe. The method may further include providing one or more alternative virtualized controls that mimic one or more operating system peripheral controls for interfacing to the operating system. The method may further include translating at least one control request and at least one response via a logical communications interface between the operating system domain and the peripheral control module domain. The method may further include: detecting an attempt to access at least one physical peripheral; and transferring control of the at least one physical peripheral to the peripheral access module domain.

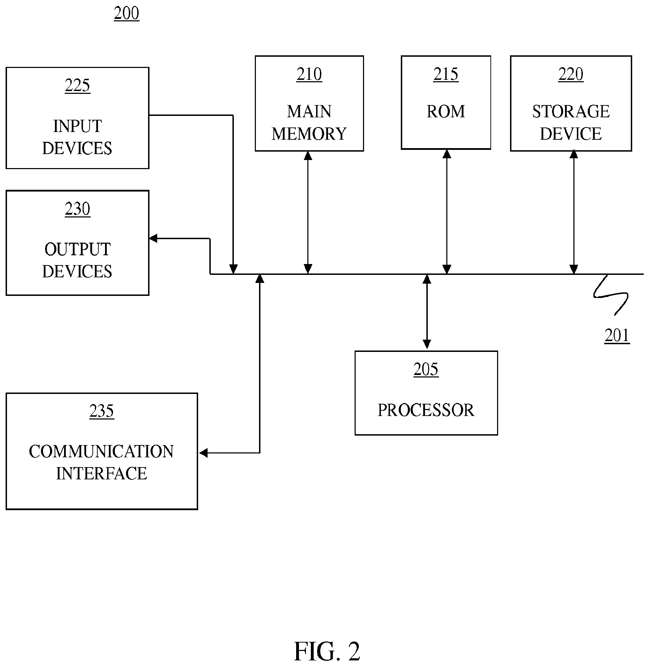

Figure 2 is an exemplary diagram of a computing device 200 that may be used to implement aspects of certain embodiments of the present invention. Computing device 200 may include a bus 201, one or more processors 205, a main memory 210, a read-only memory (ROM) 215, a storage device 220, one or more input devices 225, one or more output devices 230, and a communication interface 235. Bus 201 may include one or more conductors that permit communication among the components of computing device 200.

Processor 205 may include any type of conventional processor, microprocessor, or processing logic that interprets and executes instructions. Main memory 210 may include a random-access memory (RAM) or another type of dynamic storage device that stores information and instructions for execution by processor 205. ROM 215 may include a conventional ROM device or another type of static storage device that stores static information and instructions for use by processor 205. Storage device 220 may include a magnetic and/or optical recording medium and its corresponding drive.

Input device(s) 225 may include one or more conventional mechanisms that permit a user to input information to computing device 200, such as a keyboard, a mouse, a pen, a stylus, handwriting recognition, voice recognition, biometric mechanisms, and the like. Output device(s) 230 may include one or more conventional mechanisms that output information to the user, including a display, a projector, an A/V receiver, a printer, a speaker, and the like. Communication interface 235 may include any transceiver-like mechanism that enables computing device/server 200 to communicate with other devices and/or systems. For example, communication interface 235 may include mechanisms for communicating with another device or system via a network.

As described in detail above, computing device 200 may perform operations based on software instructions that may be read into memory 210 from another computer-readable medium, such as data storage device 220, or from another device via communication interface 235. The software instructions contained in memory 210 cause processor 205 to perform processes described herein. Alternatively, hardwired circuitry may be used in place of or in combination with software instructions to implement processes consistent with the present invention. Thus, various implementations are not limited to any specific combination of hardware circuitry and software.

A web browser comprising a web browser user interface may be used to display information (such as textual and graphical information) on the computing device 200. The web browser may comprise any type of visual display capable of displaying information received via a network, such as Microsoft's Internet Explorer browser, Netscape's Navigator browser, Mozilla's Firefox browser, PalmSource's Web Browser, Google's Chrome browser or any other commercially available or customized browsing or other application software capable of communicating with the network. The computing device 200 may also include a browser assistant. The browser assistant may include a plug-in, an applet, a dynamic link library (DLL), or a similar executable object or process. Further, the browser assistant may be a toolbar, software button, or menu that provides an extension to the web browser. Alternatively, the browser assistant may be a part of the web browser, in which case the browser would implement the functionality of the browser assistant.

The browser and/or the browser assistant may act as an intermediary between the user and the computing device 200 and/or the network. For example, source data or other information received from devices connected to the network may be output via the browser. Also, both the browser and the browser assistant are capable of performing operations on the received source information prior to outputting the source information. Further, the browser and/or the browser assistant may receive user input and transmit the inputted data to devices connected to the network.

Similarly, certain embodiments of the present invention described herein are discussed in the context of the global data communication network commonly referred to as the Internet. Those skilled in the art will realize that embodiments of the present invention may use any other suitable data communication network, including without limitation direct point-to-point data communication systems, dial-up networks, personal or corporate In-tranets, proprietary networks, or combinations of any of these with or without connections to the Internet.

While the above description contains many specifics, these should not be construed as limitations on the scope of the invention, but rather as an exemplification of certain embodiments thereof. The invention includes any combination or subcombination of the elements from the different species and/or embodiments disclosed herein. One skilled in the art will recognize that these features, and thus the scope of the present invention, should be interpreted in light of the following claims.

## Claims

1. A portable computing device (200) comprising:
an input peripheral (225);
at least one portable operating system domain (100);
a peripheral control domain (130) configured to run alongside but securely isolated from operating system domain (100): comprising
a peripheral access module (150) for providing physical access to the input peripheral (225);
a peripheral access policy module (140) for conducting a policy-driven decision process to an access attempt to activate the input peripheral (225);
a machine virtualization mechanism (170) that isolates the at least one operating system domain (100) from the peripheral control domain (130) using machine virtualization techniques;
and an I/O virtualization mechanism (160) configured to be interposed between the operating system domain (100) and the peripheral control domain (130) and configured to translate operating system-originated input peripheral access requests and responses and automatically redirect the requests from the operating system domain (100) to the peripheral control domain (130);
the peripheral access policy module (140) is configured to:
receive via the I/O virtualization mechanism an input peripheral access request from the at least one portable device operating system domain;
determine if the access request is an unauthorized attempt to activate the input peripheral;
execute a protective response if the access request is determined to be an unauthorized attempt to activate the input peripheral;
and; requesting a user input whether to grant permission to access the input peripheral and selectively permitting access to the input peripheral based at least in part on the user input;
wherein the machine virtualization mechanism is configured to render the at least one portable operating system unable to overwrite or corrupt the input request process if the user input does not grant access.

2. The device (200) of claim 1, wherein the peripheral access policy module (140) is configured to detect an unauthorized attempt by detecting an attempt to access an input peripheral (225) when the device (200) is in a lower power state.

3. The device (200) of claim 1, wherein the peripheral access policy module (140) is configured to detect an attempt to access an input peripheral (225) when a user screen is blanked.

4. The device (200) of claim 1, wherein the peripheral access policy module (140) is configured to detect an attempt to access an input peripheral (225) by an operating system component or application that is not on a white list of permitted activators of the input peripheral (225).

5. The device (200) of claim 1, wherein the peripheral access policy module (140) is configured to detect an attempt to access an input peripheral (225) when the device (200) is in a geolocation not approved for use of the peripheral.

6. The device (200) of claim 1, wherein the peripheral access policy module (140) is configured to consult a remote server for a decision whether to permit access to an input peripheral (225) when access to the input peripheral (225) is detected.

7. The device (200) of claim 1, wherein the peripheral access policy module (140) is configured to perform a local, autonomous decision regarding whether to allow input peripheral access based at least in part on at least one detectable condition.

8. The device (200) of claim 7, wherein the at least one detectable condition comprises at least one of a geolocation, one or more fixed policy settings, and an active connection to a trusted network.

9. The device (200) of claim 1, wherein the peripheral access policy module (140) receives a decision from a remote system.

10. The device (200) of claim 1, further comprising an input / data generation peripheral comprising at least one of: an audio device, a Bluetooth module, a near-field communications (NFC) module, a Wi-Fi module, a camera, a sensor, a global positioning system module, a ZigBee module and an IEEE 802.15.4 module.

11. The device (200) of claim 1, wherein the I/O virtualization mechanism (160) comprises:
one or more alternative virtualized controls that mimic one or more operating system peripheral controls for interfacing with the operating system (100).

12. The device (200) of claim 1, wherein the I/O virtualization mechanism (160) comprises:
a logical communications interface between the operating system domain and the peripheral control module domain (130) for translating control requests and responses.

13. The device of claim 1, wherein the I/O virtualization mechanism (160) comprises at least one microprocessor trap to detect an attempt to access at least one physical peripheral.

14. The device (200) of claim 13, wherein the machine virtualization mechanism (170) is configured to transfer control to the peripheral control module based on the detected attempt.

15. A method of domain isolation carried out by a portable computing device, comprising:
receiving an input peripheral (225) access request from at least one portable device operating system (100) on the input peripheral;
determining, by a peripheral access policy module (140) provided in the peripheral control domain (130) of the portable computing device, by conducting a policy-driven decision if the request is an attempt to activate the input peripheral (225);
isolating, by a machine virtualization mechanism (170) of the portable computing device, the at least one operating system domain (100) from the peripheral control domain (130) using machine virtualization techniques;
translating, by an I/O virtualization mechanism (160) of the portable computing device configured to be interposed between the operating system domain (100) and the peripheral control domain (130), operating system-originated input peripheral access requests and responses and automatically redirecting the requests from the operating system domain (100) to the peripheral control domain (130);receiving, at the peripheral access policy module (140), via the I/O virtualization mechanism an input peripheral access request from the at least one portable device operating system domain;
determining, at the peripheral access policy module (140), if the access request is an unauthorized attempt to activate the input peripheral;
executing, by the peripheral access policy module (140), a protective response if the access request is determined to be an unauthorized attempt to activate the input peripheral (225); and
requesting, by the peripheral access policy module (140), a user input whether to grant permission to access the input peripheral and selectively permitting access to the input peripheral based at least in part on the user input;
wherein the machine virtualization mechanism is configured to render the at least one portable operating system unable to overwrite or corrupt the input request if the user input does nor grant access.

16. The method of claim 15, wherein the step of determining is based at least in part on at least one detectable condition selected from a geolocation, one or more fixed policy settings, and an active connection to a trusted network.

17. The method of claim 15, wherein the step of determining comprises detecting an attempt to access an input peripheral (225) when the device (200)is in a lower power state.

18. The method of claim 15, wherein the step of determining comprises detecting an attempt to access an input peripheral (225) when a user screen is blanked.

19. The method of claim 15, wherein the step of determining comprises detecting an attempt to access an input peripheral by an operating system component or application that is not on a white list of permitted activators of the input peripheral.

20. The method of claim 15, wherein the step of determining comprises detecting an attempt to access an input peripheral (225) when the device (200) is in a geolocation not approved for use of the peripheral.

21. The method of claim 15, further comprising consulting a remote server for a decision whether to permit access to an input peripheral (225) when access to the input peripheral (225) is detected.

22. The method of claim 15, wherein the step of executing a protective response comprises activating an alarm when an unauthorized attempt to activate an input peripheral is detected.

23. The method of claim 15, wherein the step of executing a protective response comprises rendering the operating system unable to overwrite the input request process if the user input does not provide permission to access the input peripheral (225).

24. The method of claim 15, wherein the step of executing a protective response comprises at least one of logging the attempt locally; logging the attempt remotely; executing a protective response comprises an audible alarm; halting the operating system; rendering the operating system inoperable; and a data wipe.

25. The method of claim 15, further comprising:
providing one or more alternative virtualized controls that mimic one or more operating system peripheral controls for interfacing to the operating system.

26. The method of claim 15, further comprising:
translating at least one control request and at least one response via a logical communications interface between the operating system domain (100) and the peripheral control module domain.

27. The method of claim 15, further comprising:
detecting an attempt to access at least one physical peripheral; and
transferring control of the at least one physical peripheral to the peripheral access module domain.

## Patentansprüche

1. Tragbare Computervorrichtung (200), umfassend:
ein Eingabe-Peripheriegerät (225);
mindestens eine tragbare Betriebssystem-Domäne (100);
eine Peripheriesteuerungs-Domäne (130), die dafür konfiguriert ist, neben der Betriebssystem-Domäne (100), aber sicher von dieser isoliert, zu laufen: umfassend
ein Peripheriezugriffsmodul (150) zur Bereitstellung eines physischen Zugriffs auf das Eingabe-Peripheriegerät (225);
ein Peripheriezugriffs-Richtlinienmodul (140) zur Durchführung eines richtliniengesteuerten Entscheidungsprozesses zu einem Zugriffsversuch zur Aktivierung des Eingabe-Peripheriegeräts (225);
einen Maschinenvirtualisierungsmechanismus (170), der die mindestens eine Betriebssystem-Domäne (100) von der Peripheriesteuerungs-Domäne (130) mittels Maschinenvirtualisierungstechniken isoliert; und
einen I/O-Virtualisierungsmechanismus (160), der dafür konfiguriert ist, zwischen der Betriebssystem-Domäne (100) und der Peripheriesteuerungs-Domäne (130) zwischengeschaltet zu sein, und dafür konfiguriert ist, vom Betriebssystem ausgehende Zugriffsanforderungen auf das Eingabe-Peripheriegerät und Antworten zu übersetzen und die Anforderungen automatisch von der Betriebssystem-Domäne (100) zu der Peripheriesteuerungs-Domäne (130) umzuleiten;
wobei das Peripheriezugriffs-Richtlinienmodul (140) dafür konfiguriert ist:
über den I/O-Virtualisierungsmechanismus eine Zugriffsanforderung auf das Eingabe-Peripheriegerät von der mindestens einen tragbaren Vorrichtungs-Betriebssystem-Domäne zu empfangen;
zu ermitteln, ob die Zugriffsanforderung ein unbefugter Versuch zur Aktivierung des Eingabe-Peripheriegeräts ist; eine Schutzreaktion auszuführen, wenn ermittelt wird, dass die Zugriffsanforderung ein unbefugter Versuch zur Aktivierung des Eingabe-Peripheriegeräts ist; und;
eine Benutzereingabe anzufordern, ob die Berechtigung zum Zugriff auf das Eingabe-Peripheriegerät erteilt werden soll, und den Zugriff auf das Eingabe-Peripheriegerät selektiv zu gestatten, zumindest teilweise basierend auf der Benutzereingabe;
wobei der Maschinenvirtualisierungsmechanismus dafür konfiguriert ist, das mindestens eine tragbare Betriebssystem daran zu hindern, den Eingabeanforderungsprozess zu überschreiben oder zu beschädigen, falls die Benutzereingabe den Zugriff nicht gewährt.

2. Vorrichtung (200) nach Anspruch 1, wobei das Peripheriezugriffs-Richtlinienmodul (140) dafür konfiguriert ist, einen unbefugten Versuch durch Erfassen eines Versuchs zum Zugriff auf ein Eingabe-Peripheriegerät (225) zu erfassen, wenn sich die Vorrichtung (200) in einem Zustand geringerer Leistungsaufnahme befindet.

3. Vorrichtung (200) nach Anspruch 1, wobei das Peripheriezugriffs-Richtlinienmodul (140) dafür konfiguriert ist, einen Versuch zum Zugriff auf ein Eingabe-Peripheriegerät (225) zu erfassen, wenn ein Benutzerbildschirm ausgeblendet ist.

4. Vorrichtung (200) nach Anspruch 1, wobei das Peripheriezugriffs-Richtlinienmodul (140) dafür konfiguriert ist, einen Versuch zum Zugriff auf ein Eingabe-Peripheriegerät (225) durch eine Betriebssystemkomponente oder Anwendung zu erfassen, die nicht auf einer Positivliste zulässiger Aktivierungsinstanzen des Eingabe-Peripheriegeräts (225) steht.

5. Vorrichtung (200) nach Anspruch 1, wobei das Peripheriezugriffs-Richtlinienmodul (140) dafür konfiguriert ist, einen Versuch zum Zugriff auf ein Eingabe-Peripheriegerät (225) zu detektieren, wenn sich die Vorrichtung (200) an einer Geolokalisierung befindet, die für die Nutzung des Peripheriegeräts nicht zugelassen ist.

6. Vorrichtung (200) nach Anspruch 1, wobei das Peripheriezugriffs-Richtlinienmodul (140) dafür konfiguriert ist, einen entfernten Server hinsichtlich einer Entscheidung zu konsultieren, ob der Zugriff auf ein Eingabe-Peripheriegerät (225) zu gestatten ist, wenn ein Zugriff auf das Eingabe-Peripheriegerät (225) detektiert wird.

7. Vorrichtung (200) nach Anspruch 1, wobei das Peripheriezugriffs-Richtlinienmodul (140) dafür konfiguriert ist, eine lokale, autonome Entscheidung darüber zu treffen, ob der Zugriff auf das Eingabe-Peripheriegerät zumindest teilweise basierend auf mindestens einer erfassbaren Bedingung zu gestatten ist.

8. Vorrichtung (200) nach Anspruch 7, wobei die mindestens eine erfassbare Bedingung mindestens eine der Folgenden umfasst: eine Geolokalisierung, eine oder mehrere feste Richtlinieneinstellungen und eine aktive Verbindung zu einem vertrauenswürdigen Netzwerk.

9. Vorrichtung (200) nach Anspruch 1, wobei das Peripheriezugriffs-Richtlinienmodul (140) eine Entscheidung von einem entfernten System empfängt.

10. Vorrichtung (200) nach Anspruch 1, ferner umfassend ein Eingabe-/Datenerzeugungs-Peripheriegerät, das mindestens eines der Folgenden umfasst: ein Audiogerät, ein Bluetooth-Modul, ein Nahfeldkommunikations(NFC)-Modul, ein Wi-Fi-Modul, eine Kamera, einen Sensor, ein Modul für globales Positionsbestimmungssystem, ein ZigBee-Modul und ein IEEE-802.15.4-Modul.

11. Vorrichtung (200) nach Anspruch 1, wobei der I/O-Virtualisierungsmechanismus (160) umfasst:
eine oder mehrere alternative virtualisierte Steuerungen, die eine oder mehrere Betriebssystem-Peripheriesteuerungen zur Schnittstellenbildung mit dem Betriebssystem (100) nachbilden.

12. Vorrichtung (200) nach Anspruch 1, wobei der I/O-Virtualisierungsmechanismus (160) umfasst:
eine logische Kommunikationsschnittstelle zwischen der Betriebssystem-Domäne und der Peripheriesteuerungsmodul-Domäne (130) zur Übersetzung von Steuerungsanforderungen und -antworten.

13. Vorrichtung nach Anspruch 1, wobei der I/O-Virtualisierungsmechanismus (160) mindestens eine Mikroprozessor-Falle (*engl. Microprocessor trap*) umfasst, um einen Versuch zum Zugriff auf mindestens ein physisches Peripheriegerät zu erfassen.

14. Vorrichtung (200) nach Anspruch 13, wobei der Maschinenvirtualisierungsmechanismus (170) dafür konfiguriert ist, basierend auf dem erfassten Versuch die Steuerung an das Peripheriesteuerungsmodul zu übergeben.

15. Verfahren zur Domänenisolierung, durchgeführt von einer tragbaren Computervorrichtung, umfassend:
Empfangen einer Zugriffsanforderung auf ein Eingabe-Peripheriegerät (225) von mindestens einem tragbaren Vorrichtungs-Betriebssystem (100) an dem Eingabe-Peripheriegerät;
Ermitteln, durch ein Peripheriezugriffs-Richtlinienmodul (140), das in der Peripheriesteuerungs-Domäne (130) der tragbaren Computervorrichtung vorgesehen ist, durch Durchführung einer richtliniengesteuerten Entscheidung, ob die Anforderung ein Versuch zur Aktivierung des Eingabe-Peripheriegeräts (225) ist;
Isolieren, durch einen Maschinenvirtualisierungsmechanismus (170) der tragbaren Computervorrichtung, der mindestens einen Betriebssystem-Domäne (100) von der Peripheriesteuerungs-Domäne (130) mittels Maschinenvirtualisierungstechniken;
Übersetzen, durch einen I/O-Virtualisierungsmechanismus (160) der tragbaren Computervorrichtung, der dafür konfiguriert ist, zwischen der Betriebssystem-Domäne (100) und der Peripheriesteuerungs-Domäne (130) zwischengeschaltet zu sein, von vom Betriebssystem ausgehenden Zugriffsanforderungen auf das Eingabe-Peripheriegerät und Antworten und automatisches Umleiten der Anforderungen von der Betriebssystem-Domäne (100) zu der Peripheriesteuerungs-Domäne (130); Empfangen, an dem Peripheriezugriffs-Richtlinienmodul (140), über den I/O-Virtualisierungsmechanismus, einer Zugriffsanforderung auf das Eingabe-Peripheriegerät von der mindestens einen tragbaren Vorrichtungs-Betriebssystem-Domäne;
Ermitteln, an dem Peripheriezugriffs-Richtlinienmodul (140), ob die Zugriffsanforderung ein unbefugter Versuch zur Aktivierung des Eingabe-Peripheriegeräts ist;
Ausführen, durch das Peripheriezugriffs-Richtlinienmodul (140), einer Schutzreaktion, wenn ermittelt wird, dass die Zugriffsanforderung ein unbefugter Versuch zur Aktivierung des Eingabe-Peripheriegeräts (225) ist; und
Anfordern, durch das Peripheriezugriffs-Richtlinienmodul (140), einer Benutzereingabe, ob die Berechtigung zum Zugriff auf das Eingabe-Peripheriegerät erteilt werden soll, und selektives Gestatten des Zugriffs auf das Eingabe-Peripheriegerät zumindest teilweise basierend auf der Benutzereingabe; wobei der Maschinenvirtualisierungsmechanismus dafür konfiguriert ist, das mindestens eine tragbare Betriebssystem daran zu hindern, die Eingabeanforderung zu überschreiben oder zu beschädigen, falls die Benutzereingabe den Zugriff nicht gewährt.

16. Verfahren nach Anspruch 15, wobei der Schritt des Ermittelns zumindest teilweise auf mindestens einer erfassbaren Bedingung basiert, ausgewählt aus einer Geolokalisierung, einer oder mehreren festen Richtlinieneinstellungen und einer aktiven Verbindung zu einem vertrauenswürdigen Netzwerk.

17. Verfahren nach Anspruch 15, wobei der Schritt des Ermittelns das Erfassen eines Versuchs zum Zugriff auf ein Eingabe-Peripheriegerät (225) umfasst, wenn sich die Vorrichtung (200) in einem Zustand geringerer Leistungsaufnahme befindet.

18. Verfahren nach Anspruch 15, wobei der Schritt des Ermittelns das Erfassen eines Versuchs zum Zugriff auf ein Eingabe-Peripheriegerät (225) umfasst, wenn ein Benutzerbildschirm ausgeblendet ist.

19. Verfahren nach Anspruch 15, wobei der Schritt des Ermittelns das Erfassen eines Versuchs zum Zugriff auf ein Eingabe-Peripheriegerät durch eine Betriebssystemkomponente oder Anwendung umfasst, die nicht auf einer Positivliste zulässiger Aktivierungsinstanzen des Eingabe-Peripheriegeräts steht.

20. Verfahren nach Anspruch 15, wobei der Schritt des Ermittelns das Erfassen eines Versuchs zum Zugriff auf ein Eingabe-Peripheriegerät (225) umfasst, wenn sich die Vorrichtung (200) an einer Geolokalisierung (*engl. Geolocation*) befindet, die für die Nutzung des Peripheriegeräts nicht zugelassen ist.

21. Verfahren nach Anspruch 15, ferner umfassend das Konsultieren eines entfernten Servers hinsichtlich einer Entscheidung, ob der Zugriff auf ein Eingabe-Peripheriegerät (225) zu gestatten ist, wenn ein Zugriff auf das Eingabe-Peripheriegerät (225) erfasst wird.

22. Verfahren nach Anspruch 15, wobei der Schritt des Ausführens einer Schutzreaktion das Aktivieren eines Alarms umfasst, wenn ein unbefugter Versuch zur Aktivierung eines Eingabe-Peripheriegeräts erfasst wird.

23. Verfahren nach Anspruch 15, wobei der Schritt des Ausführens einer Schutzreaktion umfasst, das Betriebssystem daran zu hindern, den Eingabeanforderungsprozess zu überschreiben, falls die Benutzereingabe keine Berechtigung zum Zugriff auf das Eingabe-Peripheriegerät (225) erteilt.

24. Verfahren nach Anspruch 15, wobei der Schritt des Ausführens einer Schutzreaktion mindestens eines der Folgenden umfasst: lokales Protokollieren des Versuchs; entferntes Protokollieren des Versuchs; wobei das Ausführen einer Schutzreaktion einen akustischen Alarm umfasst; Anhalten des Betriebssystems; Unbrauchbarmachen des Betriebssystems; und eine Datenlöschung.

25. Verfahren nach Anspruch 15, ferner umfassend: Bereitstellen einer oder mehrerer alternativer virtualisierter Steuerungen, die eine oder mehrere Betriebssystem-Peripheriesteuerungen zur Schnittstellenbildung mit dem Betriebssystem nachbilden.

26. Verfahren nach Anspruch 15, ferner umfassend: Übersetzen mindestens einer Steuerungsanforderung und mindestens einer Antwort über eine logische Kommunikationsschnittstelle zwischen der Betriebssystem-Domäne (100) und der Peripheriesteuerungsmodul-Domäne.

27. Verfahren nach Anspruch 15, ferner umfassend: Erfassen eines Versuchs zum Zugriff auf mindestens ein physisches Peripheriegerät; und Übertragen der Steuerung des mindestens einen physischen Peripheriegeräts an die Peripheriezugriffsmodul-Domäne.

## Revendications

1. Dispositif informatique portable (200) comprenant : un périphérique d'entrée (225) ; au moins un domaine de système d'exploitation portable (100) ; un domaine de contrôle périphérique (130) configuré pour fonctionner parallèlement au domaine de système d'exploitation (100), mais isolé de manière sécurisée de celui-ci : comprenant un module d'accès périphérique (150) pour fournir un accès physique au périphérique d'entrée (225) ; un module de politique d'accès périphérique (140) pour mener un processus de décision piloté par des règles relatif à une tentative d'accès visant à activer le périphérique d'entrée (225) ; un mécanisme de virtualisation machine (170) qui isole le au moins un domaine de système d'exploitation (100) du domaine de contrôle périphérique (130) au moyen de techniques de virtualisation machine ; et un mécanisme de virtualisation E/S (160) configuré pour être interposé entre le domaine de système d'exploitation (100) et le domaine de contrôle périphérique (130) et configuré pour traduire les demandes d'accès au périphérique d'entrée provenant du système d'exploitation et les réponses, et pour rediriger automatiquement les demandes du domaine de système d'exploitation (100) vers le domaine de contrôle périphérique (130) ; le module de politique d'accès périphérique (140) étant configuré pour : recevoir, par l'intermédiaire du mécanisme de virtualisation E/S, une demande d'accès au périphérique d'entrée provenant du au moins un domaine de système d'exploitation de dispositif portable ; déterminer si la demande d'accès constitue une tentative non autorisée d'activation du périphérique d'entrée ; exécuter une réponse de protection s'il est déterminé que la demande d'accès constitue une tentative non autorisée d'activation du périphérique d'entrée ; et ; demander une entrée utilisateur indiquant s'il convient d'accorder la permission d'accéder au périphérique d'entrée et autoriser sélectivement l'accès au périphérique d'entrée en fonction, au moins en partie, de l'entrée utilisateur ; dans lequel le mécanisme de virtualisation machine est configuré pour rendre le au moins un système d'exploitation portable incapable d'écraser ou de corrompre le processus de demande d'entrée si l'entrée utilisateur n'accorde pas l'accès.

2. Dispositif (200) selon la revendication 1, dans lequel le module de politique d'accès périphérique (140) est configuré pour détecter une tentative non autorisée en détectant une tentative d'accès à un périphérique d'entrée (225) lorsque le dispositif (200) se trouve dans un état de faible puissance.

3. Dispositif (200) selon la revendication 1, dans lequel le module de politique d'accès périphérique (140) est configuré pour détecter une tentative d'accès à un périphérique d'entrée (225) lorsqu'un écran utilisateur est éteint.

4. Dispositif (200) selon la revendication 1, dans lequel le module de politique d'accès périphérique (140) est configuré pour détecter une tentative d'accès à un périphérique d'entrée (225) par un composant de système d'exploitation ou une application qui ne figure pas sur une liste blanche des activateurs autorisés du périphérique d'entrée (225).

5. Dispositif (200) selon la revendication 1, dans lequel le module de politique d'accès périphérique (140) est configuré pour détecter une tentative d'accès à un périphérique d'entrée (225) lorsque le dispositif (200) se trouve dans une géolocalisation non approuvée pour l'utilisation du périphérique.

6. Dispositif (200) selon la revendication 1, dans lequel le module de politique d'accès périphérique (140) est configuré pour consulter un serveur distant pour une décision quant à l'autorisation d'accès à un périphérique d'entrée (225) lorsqu'un accès au périphérique d'entrée (225) est détecté.

7. Dispositif (200) selon la revendication 1, dans lequel le module de politique d'accès périphérique (140) est configuré pour effectuer une décision locale et autonome quant à l'autorisation d'accès au périphérique d'entrée, en fonction, au moins en partie, d'au moins une condition détectable.

8. Dispositif (200) selon la revendication 7, dans lequel l'au moins une condition détectable comprend au moins l'un des éléments suivants : une géolocalisation, un ou plusieurs paramètres de politique fixes, et une connexion active à un réseau de confiance.

9. Dispositif (200) selon la revendication 1, dans lequel le module de politique d'accès périphérique (140) reçoit une décision d'un système distant.

10. Dispositif (200) selon la revendication 1, comprenant en outre un périphérique d'entrée/de génération de données comprenant au moins l'un des éléments suivants : un dispositif audio, un module Bluetooth, un module de communication en champ proche (NFC), un module Wi-Fi, une caméra, un capteur, un module de système de positionnement global, un module ZigBee et un module IEEE 802.15.4.

11. Dispositif (200) selon la revendication 1, dans lequel le mécanisme de virtualisation E/S (160) comprend : une ou plusieurs commandes virtualisées alternatives qui imitent une ou plusieurs commandes périphériques de système d'exploitation pour l'interfaçage avec le système d'exploitation (100).

12. Dispositif (200) selon la revendication 1, dans lequel le mécanisme de virtualisation E/S (160) comprend : une interface de communication logique entre le domaine de système d'exploitation et le domaine de module de contrôle périphérique (130) pour traduire les demandes et réponses de contrôle.

13. Dispositif selon la revendication 1, dans lequel le mécanisme de virtualisation E/S (160) comprend au moins une interruption (trap) de microprocesseur pour détecter une tentative d'accès à au moins un périphérique physique.

14. Dispositif (200) selon la revendication 13, dans lequel le mécanisme de virtualisation machine (170) est configuré pour transférer le contrôle au module de contrôle périphérique sur la base de la tentative détectée.

15. Procédé d'isolement de domaine mis en œuvre par un dispositif informatique portable, comprenant : la réception d'une demande d'accès à un périphérique d'entrée (225) provenant d'au moins un système d'exploitation de dispositif portable (100) concernant le périphérique d'entrée ; la détermination, par un module de politique d'accès périphérique (140) prévu dans le domaine de contrôle périphérique (130) du dispositif informatique portable, en menant une décision pilotée par des règles, si la demande constitue une tentative d'activation du périphérique d'entrée (225) ; l'isolement, par un mécanisme de virtualisation machine (170) du dispositif informatique portable, du au moins un domaine de système d'exploitation (100) par rapport au domaine de contrôle périphérique (130) au moyen de techniques de virtualisation machine ; la traduction, par un mécanisme de virtualisation E/S (160) du dispositif informatique portable configuré pour être interposé entre le domaine de système d'exploitation (100) et le domaine de contrôle périphérique (130), des demandes d'accès au périphérique d'entrée provenant du système d'exploitation et des réponses, et la redirection automatique des demandes du domaine de système d'exploitation (100) vers le domaine de contrôle périphérique (130) ; la réception, au niveau du module de politique d'accès périphérique (140), par l'intermédiaire du mécanisme de virtualisation E/S, d'une demande d'accès au périphérique d'entrée provenant du au moins un domaine de système d'exploitation de dispositif portable ; la détermination, au niveau du module de politique d'accès périphérique (140), si la demande d'accès constitue une tentative non autorisée d'activation du périphérique d'entrée ; l'exécution, par le module de politique d'accès périphérique (140), d'une réponse de protection s'il est déterminé que la demande d'accès constitue une tentative non autorisée d'activation du périphérique d'entrée (225) ; et la demande, par le module de politique d'accès périphérique (140), d'une entrée utilisateur indiquant s'il convient d'accorder la permission d'accéder au périphérique d'entrée et l'autorisation sélective de l'accès au périphérique d'entrée en fonction, au moins en partie, de l'entrée utilisateur ; dans lequel le mécanisme de virtualisation machine est configuré pour rendre le au moins un système d'exploitation portable incapable d'écraser ou de corrompre la demande d'entrée si l'entrée utilisateur n'accorde pas l'accès.

16. Procédé selon la revendication 15, dans lequel l'étape de détermination est fondée, au moins en partie, sur au moins une condition détectable choisie parmi une géolocalisation, un ou plusieurs paramètres de politique fixes, et une connexion active à un réseau de confiance.

17. Procédé selon la revendication 15, dans lequel l'étape de détermination comprend la détection d'une tentative d'accès à un périphérique d'entrée (225) lorsque le dispositif (200) se trouve dans un état de faible puissance.

18. Procédé selon la revendication 15, dans lequel l'étape de détermination comprend la détection d'une tentative d'accès à un périphérique d'entrée (225) lorsqu'un écran utilisateur est éteint.

19. Procédé selon la revendication 15, dans lequel l'étape de détermination comprend la détection d'une tentative d'accès à un périphérique d'entrée par un composant de système d'exploitation ou une application qui ne figure pas sur une liste blanche des activateurs autorisés du périphérique d'entrée.

20. Procédé selon la revendication 15, dans lequel l'étape de détermination comprend la détection d'une tentative d'accès à un périphérique d'entrée (225) lorsque le dispositif (200) se trouve dans une géolocalisation non approuvée pour l'utilisation du périphérique.

21. Procédé selon la revendication 15, comprenant en outre la consultation d'un serveur distant pour une décision quant à l'autorisation d'accès à un périphérique d'entrée (225) lorsqu'un accès au périphérique d'entrée (225) est détecté.

22. Procédé selon la revendication 15, dans lequel l'étape d'exécution d'une réponse de protection comprend l'activation d'une alarme lorsqu'une tentative non autorisée d'activation d'un périphérique d'entrée est détectée.

23. Procédé selon la revendication 15, dans lequel l'étape d'exécution d'une réponse de protection comprend le fait de rendre le système d'exploitation incapable d'écraser le processus de demande d'entrée si l'entrée utilisateur ne fournit pas la permission d'accéder au périphérique d'entrée (225).

24. Procédé selon la revendication 15, dans lequel l'étape d'exécution d'une réponse de protection comprend au moins l'un des éléments suivants : l'enregistrement local de la tentative dans un journal ; l'enregistrement à distance de la tentative dans un journal ; l'exécution d'une réponse de protection comprenant une alarme audible ; l'arrêt du système d'exploitation ; la mise hors service du système d'exploitation ; et un effacement des données.

25. Procédé selon la revendication 15, comprenant en outre : la fourniture d'une ou plusieurs commandes virtualisées alternatives qui imitent une ou plusieurs commandes périphériques de système d'exploitation pour l'interfaçage avec le système d'exploitation.

26. Procédé selon la revendication 15, comprenant en outre : la traduction d'au moins une demande de contrôle et d'au moins une réponse par l'intermédiaire d'une interface de communication logique entre le domaine de système d'exploitation (100) et le domaine de module de contrôle périphérique.

27. Procédé selon la revendication 15, comprenant en outre : la détection d'une tentative d'accès à au moins un périphérique physique ; et le transfert du contrôle du au moins un périphérique physique au domaine de module d'accès périphérique.
